(19) Europäisches Patentamt
European Patent Office
Office européen des brevets

(11) Veröffentlichungsnummer : **0 071 050**
**B1**

(12) # EUROPÄISCHE PATENTSCHRIFT

(45) Veröffentlichungstag der Patentschrift : **15.05.85**

(51) Int. Cl.⁴ : **C 08 F 8/00**, D 21 C 9/18, C 08 F226/02

(21) Anmeldenummer : **82106043.1**

(22) Anmeldetag : **07.07.82**

(54) **Lineare, basische Polymerisate, Verfahren zu deren Herstellung und deren Verwendung.**

(30) Priorität : **18.07.81 DE 3128478**
**15.04.82 DE 3213873**

(43) Veröffentlichungstag der Anmeldung : **09.02.83 Patentblatt 83/06**

(45) Bekanntmachung des Hinweises auf die Patenterteilung : **15.05.85 Patentblatt 85/20**

(84) Benannte Vertragsstaaten : **AT BE CH DE FR GB IT LI LU NL SE**

(56) Entgegenhaltungen :
**DE-A- 1 817 309**
**FR-A- 2 076 966**
**CHEMICAL ABSTRACTS, Band 84, Nr. 2, 12. Januar 1976, Seite 25, Nr. 5731h, Columbus Ohio (USA); NAGATA, MINORU et al.: "Polymerization of N-methyl-N-vinylformamide and preparation of partially quaternized poly (vinylamine) from the polymer".**
**Die Akte enthält technische Angaben, die nach dem Eingang der Anmeldung eingereicht wurden und die nicht in dieser Patentschrift enthalten sind.**

(73) Patentinhaber : **BASF Aktiengesellschaft**
**Carl-Bosch-Strasse 38**
**D-6700 Ludwigshafen (DE)**

(72) Erfinder : **Brunnmueller, Fritz, Dr.**
**Alsenzstrasse 7**
**D-6703 Limburgerhof (DE)**
Erfinder : **Schneider, Rolf, Dr.**
**Feldbergstrasse 21**
**D-6800 Mannheim (DE)**
Erfinder : **Kroener, Michael, Dr.**
**Eisiebener Weg 8**
**D-6800 Mannheim (DE)**
Erfinder : **Mueller, Hans, Dr.**
**Mohnstrasse 54**
**D-6700 Ludwigshafen (DE)**
Erfinder : **Linhart, Friedrich, Dr.**
**Richard-Kuhn-Strasse 37**
**D-6900 Heidelberg (DE)**
Erfinder : **Burkert, Hans, Dr.**
**Sudermannstrasse 6**
**D-6700 Ludwigshafen (DE)**
Erfinder : **Beyer, Karl-Heinz, Dr.**
**Knietschstrasse 6**
**D-6710 Frankenthal (DE)**

**EP 0 071 050 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Aus der DE-OS 17 20 737 ist ein Verfahren zur Herstellung basischer Polymerisate bekannt, bei dem man Poly-N-vinyl-N-methylcarbonsäureamide bei erhöhter Temperatur einer sauren Hydrolyse unterwirft. Man erhält basische Polymerisate mit sekundären Aminogruppen. Die Hydrolyse der Formylverbindungen verläuft zwar bei 100 bis 110 °C ausreichend schnell, jedoch erhält man (gemäß Beispiel 2) mit stöchiometrischen Salzsäuremengen bei ca 100 °C nur einen Hydrolysegrad von 62 Mol%. Für einen Hydrolysegrad von 93 Mol% sind 2,6 Mol Salzsäure pro Mol Formylgruppenäquivalent bei 108 bis 109 °C erforderlich (Beispiel 1). Dadurch werden die Polymerisate teilweise in unerwünschtem Maße verändert.

Aus der DE-OS 16 92 854 ist bekannt, dem Papierstoff zur Verbesserung der Entwässerungsgeschwindigkeit bei der Papierherstellung Polymerisate von N-Vinyl-N-methylcarbonsäureamiden als Entwässerungshilfsmittel zuzusetzen. Die Wirksamkeit dieser Entwässerungshilfsmittel ist jedoch noch verbesserungsbedürftig.

Aus der US-PS 4 217 214 ist bekannt, Polyvinylaminhydrochlorid eines Molekulargewichts von mehr als $3 \times 10^5$ als Flockungsmittel für in Wasser suspendierte Teilchen sowie zur Behandlung von Abwässern und Schlämmen zu verwenden. Polyvinylaminhydrochlorid wird gemäß den Angaben in der Patentschrift durch Umsetzung von Acetaldehyd und Acetamid zu Ethyliden-bis-Acetamid, das thermisch in N-Vinylacetamid und Acetamid gespalten wird, Polymerisieren des N-Vinylacetamids und Hydrolysieren des Poly-N-Vinylacetamid hergestellt. Polyvinylaminhydrochlorid ist zwar ein gutes Flockungsmittel, jedoch erscheint die Wirksamkeit dieses Produkts bei der Behandlung von Schlämmen noch verbesserungsbedürftig.

Aufgabe der Erfindung ist es, lineare, basische Polymerisate, die als charakteristischen Bestandteil Einheiten der Formel

$$\begin{array}{l} -CH_2-CH- \\ \qquad\quad | \\ \qquad\quad NH_2 \end{array}$$

einpolymerisiert enthalten, zur Verfügung zu stellen, die bei der Anwendung als Retentionsmittel, Entwässerungshilfsmittel und Flockungsmittel bei der Papierherstellung bzw. beim Flocken von Schlämmen gegenüber bekannten basischen Polymerisaten verbesserte Wirkungen ergeben.

Die Aufgabe wird erfindungsgemäß gelöst mit linearen, basischen Polymerisaten, die aus 90 bis 10 Mol% Einheiten der Formel

$$\begin{array}{l} -CH_2-CH- \\ \qquad\quad | \\ \qquad\quad NH_2 \end{array}$$

und 10 bis 90 Mol% Einheiten der Formel

$$\begin{array}{l} -CH_2-CH- \\ \qquad\quad | \\ \qquad\quad NH-CHO \end{array}$$

bestehen und einen K-Wert nach Fikentscher von 10 bis 200 (gemessen in 0,5 %iger wäßriger Kochsalzlösung bei 25 °C) aufweisen.

Die Herstellung der Verbindung der Formel $CH_2=CH-NH-CHO$ (N-Vinylformamid) wurde erstmals in der DE-AS 12 24 304 beschrieben. Die Homopolymerisation von N-Vinylformamid ist bisher nicht bekannt. Es wurde gefunden, daß N-Vinylformamid unter Verwendung radikalischer Polymerisationsinitiatoren, z. B. Peroxiden, Hydroperoxiden, Redoxkatalysatoren oder von in Radikale zerfallenden Azoverbindungen polymerisiert werden kann. Vorzugsweise werden für die Polymerisation diejenigen Azoverbindungen eingesetzt, die hierfür in der DE-OS 14 95 692 angegeben sind. Die Polymerisation wird in einem Lösungs- bzw. Verdünnungsmittel in dem Temperaturbereich von 30 bis 140 °C durchgeführt. In Abhängigkeit von den Polymerisationsbedingungen erhält man Polymerisate eines unterschiedlichen Molekulargewichts, das im folgenden mit Hilfe der K-Werte nach Fikentscher charakterisiert wird. Der K-Wert kann in einem weiten Bereich schwanken, z. B. zwischen 10 und 200 liegen. Polymerisate mit einem hohen K-Wert, z. B. von oberhalb 80, werden vorzugsweise durch Polymerisieren des N-Vinylformamids in Wasser hergestellt. Polymerisate eines niedrigeren K-Wertes, z. B. unterhalb von 80, erhält man, wenn man die Polymerisation in Gegenwart von bekannten Polymerisationsreglern oder in einem Lösungsmittel durchführt, das die Polymerisation regelt, z. B. Alkohole, wie Methanol, Ethanol, n- und Isopropanol, sowie Aceton und Methylethylketon. Andere Polymerisationsregler sind beispielsweise Hydroxylammoniumsalze, chlorierte Kohlenwasserstoffe und Thioverbindungen, wie Dodecylmercaptan. Polymerisate eines niedrigeren K-Wertes können z. B. durch Polymerisieren des N-Vinylformamids in Isopropanol unter Verwendung von darin löslichen Polymerisationsinitiatoren auf Basis von Azoverbindungen erhalten

werden. Eine besonders geeignete Azoverbindung für die Polymerisation in Isopropanol ist beispielsweise 2,2'-Azo-bis-(isobutyronitril). Für die Herstellung hochmolekularer Polymerisate des N-Vinylformamids verwendet man wasserlösliche Azoverbindungen, z. B. 2,2'-Azobis (2-amidinopropan)-hydrochlorid und 4,4'-Azo-bis-(4'-cyan-pentansäure), wobei man die Reaktion in wäßriger Lösung durchführt. Außer einer Lösungspolymerisation in Wasser, einem in Wasser löslichen Lösungsmittel, Mischungen aus Wasser und einem in Wasser löslichen Lösungsmittel kann die Polymerisation auch in einem mit Wasser nicht mischbaren Lösungsmittel nach Art einer Wasser-in-Öl-Emulsionspolymerisation erfolgen. Auch die umgekehrte Suspensionspolymerisation zur Herstellung feinteiliger Polymerisate ist möglich. Der pH-Wert bei der Polymerisation — sofern in einem wäßrigen Medium gearbeitet wird — liegt in dem Bereich von 4 bis 9, vorzugsweise 5 bis 7. Bei der Lösungspolymerisation werden vorwiegend Polymerisatlösungen hergestellt, deren Feststoffgehalt 5 bis 50, vorzugsweise 3 bis 30 Gew.% beträgt.

Aus den bei der Polymerisation erhaltenen Reaktionsprodukten werden durch Solvolyse unter Abspaltung der Formylgruppe bei Temperaturen in dem Bereich von 20 bis 200, vorzugsweise 40 bis 180 °C in Gegenwart von Säuren oder Basen Poly-(1-aminoethylene) hergestellt. Die Solvolyse wird vorzugsweise in dem Temperaturbereich von 70 bis 90 °C durchgeführt. Pro Formylgruppenäquivalent im Poly-N-vinylformamid benötigt man etwa 0,05 bis 1,5 Äquivalente (unter einem Äquivalente soll hier, wie im folgenden, 1 Grammäquivalent verstanden werden, das mit der Bezeichnung 1 Val identisch ist) einer Säure, wie Salzsäure, Bromwasserstoffsäure, Phosphorsäure und Schwefelsäure. Der pH-Wert bei der sauren Hydrolyse liegt in dem Bereich von 5 bis 0, vorzugsweise 3 bis 0. Er kann entweder durch Zugabe einer Carbonsäure, wie Ameisensäure, Essigsäure oder Propionsäure, einer Sulfonsäure, wie Benzolsulfonsäure oder Toluolsulfonsäure oder einer anorganischen Säure, wie Salzsäure, Schwefelsäure, Phosphorsäure oder Bromwasserstoffsäure eingestellt werden. Die Hydrolyse verläuft wesentlich rascher als die von Polymerisaten des N-Methyl-N-Vinylformamids und kann daher unter schonenderen Bedingungen, d. h. bei niedrigeren Temperaturen und ohne einen Überschuß von Säuren, durchgeführt werden.

Darüber hinaus läßt sich die Solvolyse der Formylgruppen des Poly-N-vinylformamids auch in alkalischem Medium durchführen, z. B. in dem pH-Bereich von 9 bis 14. Dieser pH-Wert wird vorzugsweise durch Zugabe von Natronlauge oder Kalilauge eingestellt. Es ist jedoch auch möglich, Ammoniak, Amine und Erdalkalimetallbasen, z. B. Kalziumhydroxid zu verwenden. Für die alkalische Hydrolyse verwendet man 0,05 bis 1,5, vorzugsweise 0,4 bis 1,0 Äquivalente einer Base.

Die Abspaltung der Formylgruppe kann in verschiedenen Solventien durchgeführt werden, z. B. in Wasser, Alkoholen, Ammoniak und Aminen oder Mischungen, z. B. aus Wasser und Alkoholen oder wäßrigen Lösungen von Ammoniak und/oder Aminen. In einigen Fällen kann es vorteilhaft sein, die Solvolyse in einem inerten Verdünnungsmittel durchzuführen, z. B. in Dioxan, aliphatischen oder aromatischen Kohlenwasserstoffen. In allen Fällen erhält man Poly-(1-aminoethylene). Bei der Hydrolyse, d. h. die Formylgruppe wird in Wasser von Säuren oder Basen aus dem Poly-N-vinylformamid abgespalten, erhält man als Nebenprodukt Ameisensäure bzw. Salze der Ameisensäure. Bei der Solvolyse in Alkoholen — ebenfalls in Gegenwart von Säuren oder Basen — entstehen Ameisensäureester als Nebenprodukt, während man bei der Solvolyse in Ammoniak oder Aminen Formamid bzw. substituierte Formamide erhält. Für die Solvolyse eignen sich besonders die niedrig siedenden Alkohole, wie Methanol, Ethanol, Isopropanol, n-Propanol, n-Butanol und Isobutanol.

Die Nebenprodukte der Solvolyse können entweder während oder nach Abschluß der Solvolyse aus dem System entfernt werden. So ist es beispielsweise möglich bei Verwendung Von Alkohol als Solvens die entstehenden Ameisensäureester azeotrop aus dem Reaktionsgemisch zu entfernen, wobei es gegebenenfalls erforderlich sein kann, ein Schleppmittel mitzuverwenden. Auch im Fall der Hydrolyse kann das Nebenprodukt (Ameisensäure) während oder nach Abschluß der Hydrolyse aus dem System entfernt werden. Vorzugsweise werden die Polyvinylformamide mit Natronlauge oder Salzsäure in dem Temperaturbereich von 70 bis 90°C in wäßriger Lösung hydrolysiert. Der K-Wert der hydrolysierten Polymerisate entspricht dem der nicht hydrolysierten Homopolymerisate des N-Vinylformamids.

Die Polyvinylformamide werden dabei teilweise hydrolysiert, so daß 10 bis 90, vorzugsweise 20 bis 90 % der Formylgruppen des Polyvinylformamids abgespalten werden. Man erhält auf diese Weise Polymerisate, die 90 bis 10 Mol% Einheiten der Formel

$$-CH_2-\underset{NH_2}{\underset{|}{CH}}-$$

und 10 bis 90 Mol% Einheiten der Formel

$$-CH_2-\underset{NH-CHO}{\underset{|}{CH}}-$$

in statistischer Verteilung enthalten und beispielsweise mit Hilfe der folgenden Formel charakterisiert werden können :

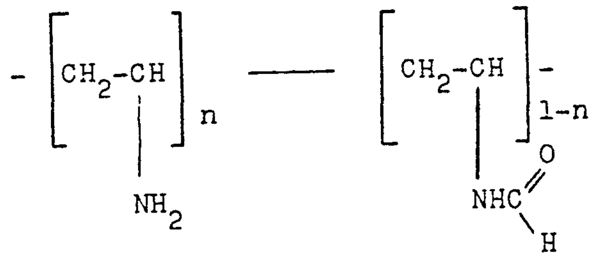

wobei n eine Zahl zwischen 0,9 und 0,1, vorzugsweise 0,2 und 0,9 bedeutet.

Die Hydrolyse ist abhängig von den Reaktionsbedingungen. Sie kann bei Normaldruck, unter vermindertem Druck, als auch bei höherem Druck durchgeführt werden. Man erhält wäßrige bzw. alkoholische Lösungen, aus denen das Polymerisat nach Abtrennen der niedrigmolekularen Bestandteile isoliert werden kann. Die bei der Solvolyse erhaltenen wäßrigen bzw. alkoholischen Lösungen können jedoch auch direkt als Retentionsmittel, Entwässerungshilfsmittel und Flockungsmittel bei der Papierherstellung oder als Flockungsmittel für Schlämme verwendet werden. Diese Polymerisate zeigen eine ausgezeichnete Wirkung und übertreffen diejenige von bekannten Handelsprodukten, wie Polyethyleniminen oder mit Ethylenimin modifizierten Polyamidoaminen. Bei der Hydrolyse mit Basen werden Polymerisate mit freien Aminogruppen erhalten, während bei der Hydrolyse mit Säuren die entsprechenden Polymersalze entstehen, aus denen jedoch nach Zusatz von Basen, wie Natronlauge oder Kalilauge, ebenfalls Polymerisate mit freien Aminogruppen .entstehen.

Die erfindungsgemäßen linearen, basischen Polymerisate werden zur Beschleunigung der Entwässerung des nassen Faservlieses und zur Erhöhung der Retention von Fein- und Füllstoffen an Cellulosefasern bei der Papierherstellung verwendet. Eine schnellere Entwässerung des Papierstoffs auf der Papiermaschine gibt die Möglichkeit, die Papiermaschinengeschwindigkeit und damit die Produktion zu steigern. Außerdem ermöglichen diese Verbindungen eine bessere Blattbildung und verringern den Wassergehalt des noch feuchten Papieres, so daß für die Trocknung des Blatts weniger Energie benötigt wird als bei Einsatz herkömmlicher Entwässerungs- und Retentionsmittel.

Eine verbesserte Retention bei der Papierherstellung erspart Rohstoffe, ermöglicht den Einsatz billigerer Füllstoffe anstelle von teureren Faserstoffen, entlastet den Wasserkreislauf der Papierfabrik und bewirkt durch bessere und gleichmäßigere Fixierung von Fein- und Füllstoffen eine bessere Bedruckbarkeit des Papiers. Eine verbesserte Retention bewirkt auch, daß weniger Stoffe ins Abwasser gelangen.

Die bei der Solvolyse von Poly-N-vinylformamiden erhaltenen Poly-(1-aminoethylene) werden in einer Menge von 0,005 bis 0,5, vorzugsweise 0,01 bis 0,1 Gew.%, bezogen auf trockenen Faserstoff, dem Papierstoff vor des Blattbildung zur Papierherstellung zugesetzt. Besonders vorteilhafte Effekte erhält man dabei mit solchen basischen Polymerisaten, deren K-Wert oberhalb von 80 liegt.

Die erfindungsgemäßen Polymerisate werden auch zur Behandlung von Schlämmen verwendet, die aus kommunalen Kläranlagen oder aus Industriekläranlagen stammen. Hierfür eignen sich vorzugsweise Polymerisate mit K-Werten von mehr als 80 bis 200. Bei den Schlämmen handelt es sich um diejenigen Stoffe, die sich bei der Klärung des Abwassers am Boden der Behandlungsvorrichtungen abgesetzt haben. Der Feststoffgehalt der Schlämme liegt etwa zwischen 2 und 8 Gew.%. Durch Zugabe der erfindungsgemäß zu verwendenden Polymerisate zu den Schlämmen, insbesondere zu Schlämmen aus kommunalen Kläranlagen, ist es möglich, einen gut filtrierbaren bzw. zentrifugierbaren Rückstand mit einem hohen Feststoffgehalt, bis zu etwa 30 Gew.%, zu gewinnen. Die Flockungsmittel werden in einer Menge von 100 bis 350 g/m$^3$ Schlamm angewendet. Es ist erforderlich, das eingesetzte Flockungsmittel im Schlamm gut zu verteilen. Dies geschieht beispielsweise in einer Mischtrommel. Die Flockungswirkung tritt praktisch sofort nach Zugabe der Flockungsmittel ein. Man kann eine Teilchenvergrößerung der zu flockenden Feststoffe beobachten. Das Wasser wird mit Hilfe üblicher Vorrichtungen, wie Siebbandpressen oder Zentrifugen vom Rückstand getrennt. Der Rückstand kann dann auf einer Deponie gelagert oder auch verbrannt werden.

Der K-Wert der Polymerisate wurde nach H. Fikentscher, Cellulosechemie *13*, 58 bis 64 und 71 bis 74 (1932) in 0,5%iger wäßriger Kochsalzlösung bei einer Temperatur von 25 °C gemessen ; dabei bedeutet $K = k \cdot 10^3$.

1. Herstellung der Polymerisate

Beispiel 1.1

In einem Kolben, der mit einem Rührer, Thermometer und einer Vorrichtung für das Arbeiten unter Stickstoff ausgerüstet war, löste man 80 g (1 125 mM) Vinylformamid in 385 g Wasser. Dazu füllte man 1,3 g (4,8 mM) 2,2'-Azo-bis-(2-amidinopropan)-hydrochlorid, entfernte den Sauerstoff durch Einleiten von Stickstoff und erwärmte das Reaktionsgemisch innerhalb einer halben Stunde auf eine Temperatur von 60 °C. Diese Temperatur wurde 5 Studen lang aufrechterhalten. Danach betrug der Umsatz 99,3 %.

Die so erhaltene viskose Polymerisatlösung (K-Wert 81) wurde dann mit 450 g 10%iger Natronlauge

(1 125 mM) versetzt und 5 Stunden auf eine Temperatur von 80 °C erhitzt. Man erhielt dabei ein Polymerisat, bei dem sämtliche Formylgruppen abgespalten waren (Hydrolysegrad = 90 %). Insgesamt erhielt man 916 g einer wäßrigen Polymerlösung, deren Viskosität 140 mPas (Brookfield, 25 °C) betrug.

Beispiel 1.2

In der im Beispiel 1 beschriebenen Apparatur wurden 80 g N-Vinylformamid in 385 g Wasser gelöst und durch Zugabe von 0,65 g 2,2'-Azo-bis-(2-amidinopropan)-hydrochlorid innerhalb von 5 Stunden bei einer Temperatur von 55 °C bis zu einem Umsatz von 98,1 % polymerisiert. Das dabei erhaltene Polymerisat (K-Wert 95) wurde mit 23 g 36 %iger Salzsäure (227 mM) 3 Stunden auf 80 °C erhitzt. Man erhielt 489 g einer Polymerlösung, aus deren Polymerisat die Formylgruppen zu 20 % abgespalten waren. Die Viskosität der Lösung betrug 16 000 mPas (Brookfield, 25 °C).

Beispiel 1.3

In der in Beispiel 1 angegebenen Apparatur wurden 80 g N-Vinylformamid in 385 g Wasser gelöst, mit 0,65 g der im Beispiel 1 angegebenen Azoverbindung als Polymerisationsinitiator versetzt und innerhalb von 1 Stunde auf eine Temperatur von 55 °C aufgeheizt. Die Polymerisation wurde innerhalb von 5 Stunden bei 55 °C durchgeführt. Zur Vervollständigung des Umsatzes erhitzte man die Reaktionsmischung im Anschluß an die Polymerisation noch eine halbe Stunde auf eine Temperatur von 60 °C. Danach betrug der Umsatz 100 %. Das so erhaltene Polymerisat (K-Wert 120) wurde dann mit 68,5 g 36 %iger Salzsäure (676 mM) 2 Stunden bei 90 °C hydrolysiert. Man erhielt 534,5 g einer wäßrigen Polymerlösung, deren Viskosität 10 500 mPas (Brookfield, 25 °C) betrug. 60 % der Formylgruppen des zur Hydrolyse eingesetzten Polymerisates waren abgespalten.

Beispiel 1.4

In einem Kolben, der mit einem Rührer, Thermometer und einer Vorrichtung für das Arbeiten unter Stickstoff ausgerüstet war, löste man 1 410,8 g N-Vinylformamid in 7 888,4 g Wasser. Dazu gab man dann 8,07 g 2,2'-Azobis (2-amidinopropan)-hydrochlorid, entfernte den Sauerstoff durch Einleiten von Stickstoff und erwärmte das Reaktionsgemisch innerhalb von 1,4 Stunden auf eine Temperatur von 50 °C. Diese Temperatur wurde 7 Stunden lang aufrecht erhalten. Danach betrug der Umsatz 99,6 %.

Die so erhaltene viskose Polymerisat-Lösung (K-Wert des Homopolymerisats betrug 120) wurde dann mit 1 715,4 g konzentrierter Salzsäure 4 Stunden auf eine Temperatur von 90 °C erhitzt. Man erhielt ein Polymerisat, das 10 Mol % N-Vinylformamid- und 90 Mol % N-Vinylamin-Einheiten einpolymerisiert enthielt (90 % der Formamidgruppen des Polymerisates waren hydrolysiert, K-Wert betrug 120).

Beispiel 1.5

In der im Beispiel 1.4 beschriebenen Apparatur wurden 1 410,8 g N-Vinylformamid in 7 888,4 ml Wasser bei einer Temperatur von 50 °C unter Verwendung von 2,2'-Azobis-(2-amidinopropan)-hydrochlorid als Polymerisationsinitiator polymerisiert. Die Polymerisation war nach 7 Stunden beendet, der Umsatz betrug 99,6 %.

Zu der viskosen Polymerlösung (K-Wert des Polymerisates betrug 120) gab man 1 143,6 g konzentrierter Salzsäure und erhitzte das Reaktionsgemisch 4 Stunden auf eine Temperatur von 90 °C. Man erhielt ein Polymerisat, das 40 Mol % N-Vinylformamid-Einheiten und 60 Mol % Aminoethylen-Einheiten einpolymerisiert enthielt (60 % der N-Formylgruppen waren hydrolysiert, K-Wert 120).

Beispiel 1.6 (Vergleich)

Als Flockungsmittel gemäß Stand der Technik wurde Polydimethyl-aminoethyl-methacrylat-hydrochlorid eines K-Wertes von 160 verwendet.

2a. Verwendung der Polymerisate als Retentionsmittel, Entwässerungshilfsmittel und Flockungsmittel

Folgende Polymerisate wurden verwendet :

Polymer I :
Handelsübliches hochmolekulares Polyethylenimin

Polymer II :
Polyamidoamin aus Adipinsäure und Diethylentriamin, das mit Ethylenimin gepfropft und mit Polyethylenglykoldichlorhydrinether mit 9 Ethylenoxideinheiten vernetzt wurde, vgl. Beispiel 3 der DE-PS-2 434 816.

Polymer III :
Polymerisat gemäß Beispiel 1.3

Polymer IV:
Polymerisat gemäß Beispiel 1.2

Polymer V:
Polymerisat gemäß Beispiel 1.1

Polymer VI:
Polymerisat gemäß Beispiel 1.3, wobei jedoch nur bis zu einem K-Wert von 102 polymerisiert wurde und durch Verseifung mit Salzsäure 82 % der Formylgruppen abhydrolysiert wurden.

Polymer VII:
Polymerisat aus N-Methyl-N-Vinylformamid, das einen K-Wert von 106 hatte und mit Salzsäure zu 75 % verseift war (hergestellt gemäß Beispiel 2 der DE-OS-1 692 854).

Beispiel 2.1

Zu 1 l eines holz- und kaolinhaltigen Zeitungspapierstoffs der Stoffdichte 2 g/l mit einem pH-Wert von 7,8 gab man verschiedene Mengen der zu prüfenden Polymeren und bestimmte mit Hilfe des Schopper-Riegler-Gerätes den Mahlgrad SR sowie die Entwässerungszeit, d. h. die Zeit, in der 700 ml Siebwasser aus dem Gerät liefen. In der Tabelle 1 sind die verwendeten Polymerisate sowie die damit erzielten Ergebnisse angegeben.

Tabelle 1

| | Mahlgrad (SR) und | | | Entwässerungszeit (s) bei | | |
|---|---|---|---|---|---|---|
| | 0,02% | 0,06% | 0,1% | 0,02% | 0,06% | 0,1% |
| | Polymerzusatz | | | | | |
| kein Zusatz | | 64 | | | 99,2 | |
| Polymer I (Vergleich) | 57 | 45 | 40 | 75,2 | 47,4 | 39,4 |
| Polymer II (Vergleich) | 54 | 40 | 36 | 67,2 | 39,6 | 32,5 |
| Polymer III (gemäß Erfindung) | 46 | 33 | 30 | 51,0 | 28,8 | 24,8 |

Beispiel 2.2

Zur Prüfung der entwässerungsbeschleunigenden Wirkung des Polymeren V wurde wie in Beispiel 1 verfahren. Als Vergleich mit dem Stand der Technik diente das Polymere II. Die Ergebnisse sind in Tabelle 2 angegeben.

Tabelle 2

| | Mahlgrad (SR) | und | Entwässerungszeit (s) bei | |
|---|---|---|---|---|
| | 0,06% | 0,1% | 0,06% | 0,1% |
| | Polymerzusatz | | | |
| kein Zusatz | 66 | | 107,5 | |
| Polymer II (Vergleich) | 50 | 41 | 56,8 | 41,4 |
| Polymer V | 47 | 38 | 51,0 | 36,3 |

Beispiel 2.3

Zu 1 l eines Papierstoffs aus 80 % gebleichtem Sulfitzellstoff und 20 % Kaolin, der 0,5 % Alaun enthielt und einen pH-Wert von 6 hatte, gab man verschiedene Mengen der in Tabelle 3 angegebenen Polymeren und stellte dann mit Hilfe eines Rapid-Köthen-Blattbildners Papierblätter her. Das Flächengewicht und der Füllstoffgehalt der Papierblätter, der durch Veraschung bestimmt wurde, sind Kriterien für die Wirksamkeit des Polymeren. Je höher das Flächengewicht und der Füllstoffgehalt der Papierblätter ist, desto besser ist die Wirksamkeit des Retentionsmittels einzuschätzen.

Tabelle 3

| | Flächengewicht ($g/cm^2$) und Aschegehalt (%) bei | | | | | |
|---|---|---|---|---|---|---|
| | 0,02% | 0,04% | 0,06% | 0,02% | 0,04% | 0,06% |
| | Polymerzusatz | | | | | |
| kein Zusatz | | 58,0 | | | 4,2 | |
| Polymer I (Vergleich) | 61,3 | 62,1 | 62,6 | 7,7 | 9,1 | 9,7 |
| Polymer II (Vergleich) | 62,3 | 64,1 | 64,5 | 9,6 | 11,7 | 12,0 |
| Polymer III | 67,6 | 69,9 | 70,8 | 12,0 | 14,7 | 14,7 |

Beispiel 2.4

Die Füllstoffretention wurde an einem Papierstoff bestimmt, der aus 80 % gebleichtem Sulfitzellstoff und 20 % Kaolin bestand und 1,5 % Alaun enthielt. Der pH-Wert des Papierstoffs betrug 4,8. Die Füllstoffretention wurde gemäß den Angaben in Beispiel 3 bestimmt. Die Wirksamkeit des Polymer IV wurde mit den bekannten Retentionsmitteln I und II verglichen. Die Ergebnisse sind in Tabelle 4 zusammengefaßt.

Tabelle 4

| | Aschegehalt bei | | |
|---|---|---|---|
| | 0,02 % | 0,04 % | 0,06 % |
| | Polymerzusatz | | |
| kein Zusatz | | 3,7 | |
| Polymer I (Vergleich) | 5,8 | 6,3 | 7,0 |
| Polymer II (Vergleich) | 8,8 | 9,5 | 9,9 |
| Polymer IV | 10,9 | 11,9 | 12,6 |

Beispiel 2.5

Um die Flockungswirkung und die Abwasserklärung der erfindungsgemäßen Polymeren zu bestimmen, wurde ein feinstoffreicher Papierstoff, der pro Liter 1 g Sulfitzellstoff und 0,25 g Kaolin enthielt, mit unterschiedlichen Mengen der in Tabelle 5 angegebenen Polymeren versetzt. Nach dem Umrühren und Absetzen der Suspension wurde jeweils die Durchsichtigkeit des überstehenden Klarwassers photometrisch bestimmt. Die Ergebnisse sind in Tabelle 5 zusammengefaßt.

Tabelle 5

| | Durchsichtigkeit (%) bei 0,02 % Polymerzugabe | Durchsichtigkeit (%) bei 0,04 % Polymerzugabe |
|---|---|---|
| kein Zusatz | 19,0 | |
| Polymer I (Vergleich) | 42,0 | 60,8 |
| Polymer II (Vergleich) | 41,9 | 52,1 |
| Polymer III | 57,5 | 77,8 |

Beispiel 2.6

Zu 1 l eines holz- und kaolinhaltigen Zeitungspapierstoffs der Stoffdichte 2 g/l mit einem pH-Wert von 7,8 gab man verschiedene Mengen der zu prüfenden Polymeren und bestimmte mit Hilfe des Schopper-Riegler-Gerätes den Mahlgrad SR sowie die Entwässerungszeit, d. h. die Zeit, in der 700 ml Siebwasser aus dem Gerät liefen. In der Tabelle 6 sind die verwendeten Polymerisate sowie die damit erzielten Ergebnisse angegeben.

Tabelle 6

| | Mahlgrad (SR) und Entwässerungszeit (s) bei | | | | | |
|---|---|---|---|---|---|---|
| | 0,02% | 0,06% | 0,1% | 0,02% | 0,06% | 0,1% |
| | Polymerzusatz | | | | | |
| kein Zusatz | | 62<br>61 | | | 99,3<br>101,0 | |
| Polymer II | 51 | 38 | 34 | 68,0 | 40,1 | 34,0 |
| (Vergleich) | 51 | 39 | 34 | 68,2 | 40,2 | 34,0 |
| Polymer VII | 50 | 50 | 50 | 66,8 | 64,6 | 66,0 |
| (Vergleich) | 50 | 49 | 50 | 66,5 | 63,8 | 67,0 |
| Polymer VI | 49 | 34 | 31 | 61,4 | 33,4 | 29,3 |
| | 49 | 33 | 31 | 62,0 | 32,3 | 29,5 |

Die Wirksamkeit des erfindungsgemäß zu verwendenden Polymer VI ist gegenüber dem nächstliegenden Stand der Technik (Polymer VII) in nicht vorhersehbarer Weise verbessert.

Beispiel 2.7

Die Füllstoffretention wurde an einem Papierstoff bestimmt, der aus 80 % gebleichtem Sulfitzellstoff und 20 % Kaolin bestand und 0,5 % Alaun enthielt. Der pH-Wert des Papierstoffs betrug 6,0. Zu 1 l dieses Stoffs gab man verschiedene Mengen der in Tabelle 7 angegebenen Polymeren und stellte dann mit Hilfe eines Rapid-Köthen-Blattbildners Papierblätter her. Der Füllstoffgehalt der Papierblätter, der durch Veraschung bestimmt wurde, ist ein Kriterium für die Wirksamkeit des Polymeren als Retentionsmittel.

Tabelle 7

| | Aschegehalt bei 0,02 % Polymerzusatz | Aschegehalt bei 0,04 % Polymerzusatz | Aschegehalt bei 0,06 % Polymerzusatz |
|---|---|---|---|
| kein Zusatz | | 3,7 | |
| Polymer II (Vergleich) | 9,3 | 10,6 | 11,5 |
| Polymer VII (Vergleich) | 10,0 | 9,8 | 9,9 |
| Polymer VI | 9,6 | 12,1 | 13,1 |

2b. Verwendung der Polymerisate als Flockungsmittel für Schlämme

Aus den Polymeren gemäß Beispielen 1.4, 1.5 und 1.6 wurden 0,1 %ige wäßrige Lösungen hergestellt und als Flockungsmittel für Klärschlamm getestet. Folgende Prüfmethoden wurden angewandt :

a) Bestimmung der Flockungszahl und der Filtrationsgeschwindigkeit

500 ml eines Abwasserschlammes wurden in einem 1 l-Meßzylinder mit bestimmten Mengen einer 0,1 %igen wäßrigen Flockungsmittel-Lösung versetzt. Die Flockung trat während der Durchmischung ein. Der Inhalt des Meßzylinders wird dann in einen Büchner-Trichter entleert und filtriert. Anhand des Filters wird die Flockung visuell beurteilt. Dabei bedeutete :

| | |
|---|---|
| kaum sichtbare Flockung = | Flockungszahl 1 |
| geringe Flockung = | Flockungszahl 2 |
| mittlere Flockung = | Flockungszahl 3 |
| gute Flockung für die Praxis meistens ausreichend = | Flockungszahl 4 |
| sehr gute, optimale Flockung = | Flockungszahl 5 |

Gleichzeitig wurde die Filtratmenge nach 30, 60, 90 und 120 sek. gemessen.

b) Flockungswirksamkeit

Bei diesem Test wurde ebenfalls — in einem 1 l-Meßzylinder die Flockungsmittelmenge ermittelt, die zu einem Schlamm gegeben werden muß, um eine optimale Flockung (Flockungszahl = 5) zu erzielen.

Beispiel 3

An einem Faulschlamm aus einer kommunalen Kläranlage wurde die Flockungswirksamkeit für die Polymeren gemäß den Beispielen 1.4 und 1.5 im Vergleich zum Polymer gemäß Beispiel 1.6 nach der oben unter b) angegebenen Methode bestimmt. Für das Polymer gemäß Beispiel 1.4 betrug die Menge für eine optimale Flockung 200 mg/l Schlamm, für das Polymer gemäß Beispiel 1.5 150 mg/l, während bei Einsatz des Polymeren gemäß Beispiel 1.6 250 mg/l Schlamm verwendet werden mußten.

Die Polymeren gemäß den Beispielen 1.4 und 1.5 sind bedeutend wirksamer als das Polymer gemäß Stand der Technik.

Beispiel 4

An einem Faulschlamm aus einer kommunalen Kläranlage wurde die Flockungszahl und die Filtrationsgeschwindigkeit für die Polymeren gemäß den Beispielen 1.4 und 1.5 im Vergleich zum Polymer gemäß Beispiel 1.6 nach der unter a) angegebenen Methode bestimmt :

| Polymer gemäß Beispiel | Zugabemenge mg/l Schlamm | Flockungszahl | Filtratmenge in ml nach 30 | 60 | 90 | 120 sek. |
|---|---|---|---|---|---|---|
| 1.4 | 100 | 3-4 | | | | |
| 1.4 | 150 | 4-5 | | | | |
| 1.4 | 200 | 5 | 310 | 360 | 370 | 375 |
| 1.5 | 50 | 3-4 | | | | |
| 1.5 | 100 | 4 | | | | |
| 1.5 | 150 | 5 | 325 | 370 | 380 | 390 |
| Vergleich | | | | | | |
| 1.6 | 150 | 3 | | | | |
| 1.6 | 200 | 4 | | | | |
| 1.6 | 250 | 5 | 230 | 325 | 350 | 370 |

**Patentansprüche**

1. Lineare, basische Polymerisate bestehend aus 90 bis 10 Mol% Einheiten der Formel

$$-CH_2-\underset{NH_2}{\underset{|}{CH}}-$$

und 10 bis 90 Mol% Einheiten der Formel

$$-CH_2-\underset{NH-CHO}{\underset{|}{CH}}-$$

die einen K-Wert nach Fikentscher von 10 bis 200 (gemessen in 0,5 %iger wäßriger Kochsalzlösung bei 25 °C) aufweisen.

2. Verfahren zur Herstellung der linearen, basischen Polymerisate nach Anspruch 1, dadurch gekennzeichnet, daß man die Verbindung der Formel $CH_2$=CH—NH—CHO (N-Vinylformamid) in Gegenwart von radikalischen Polymerisationsinitiatoren zu Polyvinylformamiden polymerisiert und die so erhaltenen Polymerisate bei Temperaturen von 20 bis 200 °C in Gegenwart von Säuren oder Basen unter Abspaltung von 10 bis 90 % der Formylgruppen aus dem Homopolymerisat des N-Vinylformamids solvolysiert.

3. Verfahren nach Anspruch 2, dadurch gekennzeichnet, daß man Vinylformamid in wäßriger Lösung unter Verwendung von Polymerisationsinitiatoren auf Basis wasserlöslicher Azoverbindungen polymerisiert und die so hergestellten Polymerisate in einem Alkohol oder Wasser solvolysiert.

4. Verfahren nach den Ansprüchen 2 und 3, dadurch gekennzeichnet, daß pro Formylgruppenäquivalent des bei der Polymerisation erhaltenen Polyvinylformamids 0,05 bis 1,5 Äquivalente einer Mineralsäure oder einer Base verwendet werden.

5. Verfahren nach Anspruch 4, dadurch gekennzeichnet, daß pro Formylgruppenäquivalent des bei der Polymerisation erhaltenen Polyvinylformamids 0,4 bis 1 Äquivalent einer Mineralsäure verwendet wird.

6. Verfahren nach Anspruch 4, dadurch gekennzeichnet, daß pro Formylgruppenäquivalent der Polyvinylformamide 0,4 bis 1 Äquivalent einer Base verwendet wird.

7. Verwendung der linearen, basischen Polymerisate nach Anspruch 1 als Retentionsmittel, Entwässerungshilfsmittel und Flockungsmittel bei der Herstellung von Papier.

8. Verwendung der linearen, basischen Polymerisate nach Anspruch 1 als Flockungsmittel für Schlämme.

**Claims**

1. A linear basic polymer consisting of 90 to 10 mole % of units of the formula

$$-CH_2-\underset{NH_2}{\underset{|}{CH}}-$$

and from 10 to 90 mole % of units of the formula

$$-CH_2-\underset{NH-CHO}{\underset{|}{CH}}-$$

and having a Fikentscher K value of from 10 to 200 (measured in 0.5 % strength aqueous sodium chloride solution at 25 °C).

2. A process for the preparation of a linear basic polymer as claimed in claim 1, wherein the compound of the formula $CH_2$=CH—NH—CHO (N-vinylformamide) is polymerized to a polyvinylformamide in the presence of a free radical polymerization initiator, and the resulting polymer is solvolyzed at from 20 to 200 °C in the presence of an acid or base, from 10 to 90 % of the formyl groups being split off from the N-vinylformamide homopolymer.

3. A process as claimed in claim 2, wherein vinylformamide is polymerized in aqueous solution using a polymerization initiator based on a water-soluble azo compound, and the polymer thus prepared is solvolyzed in an alcohol or water.

4. A process as claimed in claims 2 and 3, wherein from 0.05 to 1.5 equivalents of a mineral acid or of

a base are used per formyl group equivalent of the polyvinylformamide obtained during polymerization.

5. A process as claimed in claim 4, wherein from 0.4 to 1 equivalent of a mineral acid is used per formyl group equivalent of the polyvinylformamide obtained during polymerization.

6. A process as claimed in claim 4, wherein from 0.4 to 1 equivalent of a base is used per formyl group equivalent of the polyvinylformamide.

7. The use of a linear basic polymer as claimed in claim 1 as a retention agent, drainage assistant or flocculant in papermaking.

8. The use of a linear basic polymer as claimed in claim 1 as a flocculant for sludges.

**Revendications**

1. Polymérisats basiques, linéaires, constitués de 90 à 10 moles % de motifs de formule

$$-CH_2-CH-$$
$$NH_2$$

et 10 à 90 moles % de motifs de formule

$$-CH_2-CH-$$
$$NH-CHO$$

qui présentent un indice K selon Fikentscher de 10 à 200 (mesuré à 25 °C dans une solution de chlorure de sodium aqueuse à 0,5 %.

2. Procédé de préparation de polymérisats linéaires basiques, selon la revendication 1, caractérisé par le fait que l'on polymérise en polyvinylformamides le composé de formule $CH_s$=CH—NH—CHO (N-vinylformamide), en présence d'initiateurs de polymérisation radicalaire et on solvolyse les polymérisats obtenus à des températures de 20 à 200 °C, en présence d'acides ou de bases, avec séparation de 10 à 90 % des groupes formyle de l'homopolymérisat du N-vinylformamide.

3. Procédé selon la revendication 2, caractérisé par le fait que l'on polymérise du vinylformamide en solution aqueuse, en utilisant des initiateurs de polymérisation à base de composés azo solubles dans l'eau et on solvolyse les polymérisats obtenus dans un alcool ou de l'eau.

4. Procédé selon les revendications 2 et 3, caractérisé par le fait que, par équivalent de groupes formyle du polyvinylformamide obtenu lors de la polymérisation, on utilise 0,05 à 1,5 équivalent d'un acide minéral ou d'une base.

5. Procédé selon la revendication 4, caractérisé par le fait que, par équivalent de groupes formyle du polyvinylformamide obtenu lors de la polymérisation, on utilise 0,4 à 1 équivalent d'un sel minéral.

6. Procédé selon la revendication 4, caractérisé par le fait que, par équivalent de groupes formyle du polyvinylformamide, on utilise 0,4 à 1 équivalent d'une base.

7. Utilisation des polymérisats basiques, linéaires, selon la revendication 1, comme agents de rétention, comme auxiliaires de séchage et floculants pour la fabrication de papier.

8. Utilisation des polymérisats basiques linéaires selon la revendication 1 comme floculants pour des schlaums.